# EUROPEAN PATENT SPECIFICATION

(11) **EP 2 452 960 B1**
(45) Date of publication and mention of the grant of the patent: **07.01.2015**
(21) Application number: 10191004.0
(22) Date of filing: 12.11.2010
(51) Int. Cl.: C08F 210/06, C08F 4/646, C08L 23/10, C08F 4/649

(54) **Process for preparing propylene polymers with an ultra high melt flow rate**
Verfahren zur Herstellung von Propylencopolymeren mit einer extrem hohen Schmelzflussrate
Procédé pour la préparation de polymères de propylène avec un taux de fluidité ultra élevé

(43) Date of publication of application: 16.05.2012
(73) Proprietor: Borealis AG, 1220 Vienna (AT)
(72) Inventor: Paavilainen, Juha, 00510, Helsinki (FI); Leskinen, Pauli, 00700, Helsinki (FI)
(74) Representative: Lux, Berthold

(56) References cited:
- WO-A1-01/48041
- WO-A1-98/30611
- WO-A1-2009/153213

## Description

The present invention relates to an improved process for producing propylene homo- and copolymers having an ultra high melt flow rate, said process comprises the polymerisation of the monomers in the presence of a Ziegler-Natta procatalyst, a cocatalyst, and a special external donor.

Ultra high MFR polymers are suitable for many applications. In particular, ultra high MFR polymers are useful for melt blowing processing purposes.

Propylene polymers with an ultra high melt flow rate, i.e. a melt flow rate MFR₂ (230°C, 2.16kg, ISO 1133) of 400 g/10min or more are typically prepared by polymerising propylene and optional comonomers to a relatively high molecular weight and subsequent controlled rheology (CR) techniques, including, e.g., visbreaking, which means that the polymer is subjected to a post-reactor treatment, wherein the polymer molecules are subjected to controlled scission in molten state. The scission may be carried out by mechanical shearing, radiation, oxidation or chemically with peroxy compounds. The visbreaking carried out by adding peroxide to the polymer granules is disclosed in, e.g., EP-A-462 574. The problem with the use of peroxide is the residues remained in the polymer. The peroxide residues result in fumes and die deposits on fibre processing equipment.

The trend in industry is towards polymer materials with increasingly higher melt flow rates as it is in general important in melt blowing processes to have a maximum possible throughput without the phenomenon called "shots", and to be able to use as great an air volume as possible when aiming at the minimum fibre thickness without the phenomenon called "fly", which can be better achieved with polymer materials having higher melt flow rates. Therefore the focus has been on developing polymer materials which can be used in melt blown processes to produce thinner fibres in industrially feasible production conditions and, subsequently, very lightweight melt blown webs with excellent uniformity and which avoid the need of CR techniques in order to achieve as high melt flow rates as possible.

According to the state of the art several proposals have already been made to prepare polymer materials with high melt flow rates.

EP 1 538 167, for example, describes i.a. the alpha-olefin propylene homo- and copolymerisation using a catalyst system which comprises the following components (A), (B) and (C):
Component (A): a solid component (i) containing magnesium, titanium, halogen and an
   internal donor,
Component (B): an organometallic compound and
Component (C): an organosilicon compound represented by the formula

   Si(OR¹)₃(NR²R³)

   wherein R¹ is a hydrocarbon group having 1 to 6 carbon atoms, R² is a hydrocarbon group having 1 to 12 carbon atoms or hydrogen atom, and R³ is a hydrocarbon group having 1
   to 12 carbon atoms and optionally
Compound (D): a further organosilicon compound different from Component (C).

Component (A) may be prepared for example by co-grinding a magnesium compound, an electron donor and a titanium halide compound, or by dispersing and dissolving them in a solvent to allow them to contact each other. A further method mentioned comprises dissolving a magnesium compound and an electron donor in a solvent and adding a titanium halide compound to the resulting solution to precipitate a solid catalyst.

According to EP 1 538 167 this catalyst system allows production of an alpha-olefin polymer, like propylene homo- or copolymers, with high hydrogen response, high polymerisation rate, high stereoregularity and high melt fluidity.

Propylene homopolymers with an MFR₂ (230°C, 2.16kg, ISO 1133) in the range of 380 to 1800 g/10min are prepared in a one-step polymerisation process using one organosilicon compound (C).

Propylene random copolymers with an MFR₂ (230°C, 2.16kg, ISO 1133) up to 46.3 g/10min are prepared in a one-step polymerisation process using one organosilicon compound (C). Propylene block copolymers with an MFR₂ (230°C, 2.16kg, ISO 1133) up to 242 g/10min are prepared in a two-step polymerisation process, comprising homopolymerisation of propylene and subsequent copolymerisation of ethylene and propylene, using one organosilicon compound (C).

There is no description of propylene homopolymers or random copolymers suitable for melt blowing processes.

EP 1 783 145 discloses a method for producing i.a. a propylene random copolymer using a catalyst system which comprises the following components (A), (B) and (C):
Component (A): a prepolymer obtained by olefin prepolymerisation on solid titanium catalyst
   component (A'), prepared by contacting a solid component (i) containing magnesium, titanium, halogen and an donor (c₃), a polar compound (ii) having a dipole moment of 0.5 to 4.0 Debye, and at least one compound (iii) selected from liquid titanium (d) and an electron donor (e)
Component (B): an organometallic compound and
Component (C): an organosilicon compound represented by the formula

   Si(OR¹)₃(NR²R³)

   wherein R¹ is a hydrocarbon group having 1 to 8 carbon atoms, R² is a hydrocarbon group having 1 to 12 carbon atoms or hydrogen atom, and R³ is a hydrocarbon group having 1 to 12 carbon atoms.

The propylene copolymer compositions, for example propylene random copolymers, obtained according to EP 1 783 145 can be processed into a desired moulded article such as automotives, domestic electric appliances, and others, films for retorting, etc., sheets, blow moulded products, and injection blow moulded products, obtained by performing various moulding methods including an injection moulding method, an extrusion moulding method, an injection blow moulding method, and a blow moulding method. The only advantage mentioned in EP 1 783 145 is that olefinic polymers having high fluidity as well as high stereoregularity even without excessive use of hydrogen molecule as chain transfer agent can be effectively manufactured.

Propylene homopolymers with an MFR₂ (230°C, 2.16kg, ISO 1133) in the range of 345 to 765 g/10min are prepared in a one-step polymerisation process.

Propylene block copolymers with an MFR₂ (230°C, 2.16kg, ISO 1133) up to 40 g/10min are prepared in a two-step polymerisation process, comprising homopolymerisation of propylene and subsequent copolymerisation of ethylene and propylene.

EP 1 717 269 discloses alpha-olefin homo- or copolymer compositions, preferably propylene polymers, with an MFR₂ (230°C, 2.16kg, ISO 1133) of not more than 1000 g/10 min which are advantageously prepared in the presence of a polymerisation catalyst produced with the emulsion/solidification technology as disclosed e.g. in WO 03/000754, WO 03/000757 or WO 2004/029112 and cyclohexyl methyl dimethoxy silane or dicyclopentyl dimethoxy silane as external donor.

According to the examples propylene homopolymers produced with this combination of polymerisation catalyst and external donor have an MFR₂ (230°C, 2.16kg, ISO 1133) of up to 113 g/10min.

EP 1 303 547 describes propylene polymers having an ultra high melt flow rate MFR₂ (230°C, 2.16kg, ISO 1133) above 400 g/10min which are produced in at least one bulk polymerisation zone and optionally at least one gas phase polymerisation zone using conventional, commercially available Ziegler-Natta catalysts as well as single site catalysts. According to the examples conventional Ziegler-Natta catalysts prepared according to WO 98/12234 (Type A) and WO 92/19653 (Type B) in combination with cyclohexyl methyl dimethoxysilane as external donor and an impregnated PP Single Site catalyst were used in a bulk (loop) - gas phase reactor (GPR) combination in order to produce ultra high melt flow rate homopolymer for melt blown fibre applications.

The polymers obtained after the loop reactor had an MFR₂ (230°C, 2.16kg, ISO 1133) in the range of 879 to 1100 g/10min and the final propylene homopolymers obtained after the gas phase reactor had an MFR₂ (230°C, 2.16kg, ISO 1133) in the range of 820 to 1040.

Although much development work has been done in the field of propylene homo- or copolymers with high melt flow rate, there is a continuous need for alternative or improved propylene homo- or copolymers with even higher melt flow rates, which fulfil the increasing customer requirements, thus being suitable for blow moulding applications, like fibres. These properties shall be achieved without any subsequent further treatment of the polymers for increasing the melt flow.

It was therefore an object of the invention to provide propylene homo- or copolymers with ultra high melt flow, which are suitable for blow moulding applications, preferably for the production of fibres.

The present invention resides in the finding that such propylene homo- or copolymers are obtainable by a polymerisation procedure in the presence of a Ziegler-Natta procatalyst in combination with a special external donor.

Thus in a first aspect, the present invention is therefore directed to a process for the production of propylene homo- or copolymers with an MFR₂ (230°C, 2.16kg, ISO 1133) in the range of 1200 to 3000 g/10min,
said process comprises the steps of
a) polymerising propylene and optionally ethylene and/or a C₄-C₁₂ alpha-olefin comonomer in a slurry reactor in the presence of a polymerisation catalyst system, obtaining as slurry reactor product a first propylene homo- or copolymer component with an MFR₂ (230°C, 2.16kg, ISO 1133) in the range of 1000 to 4000 g/10min,
b) transferring the slurry reactor product into a gas phase reactor
c) further polymerising propylene and optionally ethylene and/or a C₄-C₁₂ alpha-olefin comonomer in the presence of said slurry reactor product and the polymerisation catalyst system
d) optionally recovering the so produced propylene homo- or copolymer for further
   processing,
said polymerisation catalyst system comprises
(i) a Ziegler-Natta procatalyst
(ii) an organometallic cocatalyst and
(iii) an external donor represented by formula (I)

   Si(OCH₂CH₃)₃(NR¹R²) (I)

   wherein R¹ and R² can be the same or different and represent a hydrocarbon group having 1 to 12 carbon atoms.

According to the invention the propylene homo- or copolymers are obtained by a polymerization process in the presence of a catalyst system comprising as component (i) a Ziegler-Natta procatalyst, (ii) an organometallic cocatalyst and (iii) an external donor represented by formula (I)

Si(OCH₂CH₃)₃(NR¹R²) (I)

wherein R¹ and R² can be the same or different and represent a hydrocarbon group having 1 to 12 carbon atoms.

The Ziegler-Natta procatalyst (i) used according to the present invention is typically a stereospecific, high yield Ziegler-Natta procatalyst comprising as essential component a solid transition metal component. This type of procatalysts comprise, as described in detail below, in addition to the solid transition metal (like Ti) component a cocatalyst(s) (ii) as well external donor(s) (iii) as stereoregulating agent.

The solid transition metal component preferably comprises a magnesium halide and a transition metal compound. These compounds may be supported on a particulate support, such as inorganic oxide, like silica or alumina, or, usually, the magnesium halide itself may form the solid support. Examples of such catalysts are disclosed, among others, in WO 87/07620, WO 92/21705, WO 93/11165, WO 93/11166, WO 93/19100, WO 97/36939, WO 98/12234, WO 99/33842, WO 03/000756, WO 03/000757, WO 03/000754 and WO 2004/029112.

It is also possible that solid catalysts are self supported, i.e. the catalysts are not supported on an external support, but are prepared via emulsion-solidification technology, as described for example in WO 03/000757, WO 03/000754 and WO 2004/029112.

In addition to the magnesium halide and transition metal compound the solid transition metal component usually also comprises an electron donor (internal electron donor). Suitable electron donors are, among others, esters of carboxylic acids, like phthalates, citraconates, and succinates. Also oxygen- or nitrogen-containing silicon compounds may be used. Examples of suitable compounds are shown in WO 92/19659, WO 92/19653, WO 92/19658, US 4347160, US 4382019, US 4435550, US 4465782, US 4473660, US 4530912 and US 4560671.

Preferably the Ziegler-Natta procatalyst (i) used for the present invention is a Ziegler-Natta procatalyst, which is produced with the emulsion/solidification technology.

The preferred Ziegler-Natta procatalyst (i), which is produced with the emulsion/solidification technology, used in the process of the invention is known in the state of the art as procatalysts for preparing polypropylene.

Its preparation is described in several patent applications.

WO 03/000757 as well as WO 03/000754 describes the basic process for the preparation of Ziegler-Natta procatalysts used in the preparation of polypropylene comprising a group 2 metal together with a transition metal, using emulsion/solidification technology.

WO 2004/029112 discloses a further process for preparing such a Ziegler-Natta procatalyst used in the preparation of polypropylene by emulsion/solidification technology, wherein the process is further characterized in that a specific aluminium alkyl compound is brought into contact with the catalyst component, enabling a certain degree of activity increase at higher temperatures.

EP-A-1 862 480 describes also a process for preparing such a Ziegler-Natta procatalyst used in the preparation of polypropylene by emulsion/solidification technology, wherein the control of catalytic activity is achieved by decreasing the amount of titanium present in the solidified particles of the olefin polymerisation catalyst component being present in the oxidation state +4 by adding a reducing agent.

EP-A-1 862 481 describes a process for preparing such a Ziegler-Natta procatalyst used in the preparation of polypropylene by emulsion/solidification technology, wherein the process is further characterized in that a specific aluminium alkoxy compound is brought into contact with the catalyst component, enabling a certain degree of activity increase at higher temperatures.

EP-A-1 939 227 describes a process for preparing such a Ziegler-Natta procatalyst used in the preparation of polypropylene by emulsion/solidification technology, wherein the process is further characterized in that a specific phosphorous compound is added.

The above cited patent applications describe the general principles of the preparation of a Ziegler-Natta procatalyst used in the preparation of polypropylene in the form of particles having a predetermined size range under inert conditions.

As stated above these preferred procatalysts are produced by emulsion/solidification technology comprising the steps of:
(i-1) preparing a solution of a complex of a Group 2 metal and an electron donor by reacting a compound of said metal with said electron donor or a precursor thereof in an organic liquid reaction medium,
(i-2) adding said solution of said complex to at least one compound of a transition metal to produce an emulsion, wherein the dispersed phase of which is in the form of droplets and contains more than 50 mol% of the Group 2 metal in said complex,
(i-3) agitating the emulsion in order to maintain the droplets of said dispersed phase within said predetermined average size range,
(i-4) solidifying said droplets of the dispersed phase,
(i-5) washing the solidified particles at least once,
(i-6) drying the solidified particles or slurring the solidified particles to an oily liquid with or without drying and optionally
(i-7) recovering the dried or slurried solidified particles of the olefin polymerisation catalyst component.

The Group 2 metal used in step (i-1) of the inventive process is preferably magnesium, and the liquid organic reaction medium comprises a C₆-C₁₀ aromatic hydrocarbon, preferably toluene, and/or the mixture of said aromatic hydrocarbon and an aliphatic C₅-C₂₀₋hydrocarbon, preferably C₅-C₁₆ aliphatic hydrocarbon, more preferably C₅-C₁₂ aliphatic hydrocarbon and most preferably C₅-C₉ aliphatic hydrocarbon, provided that the aliphatic hydrocarbon is liquid at the temperature used in step (i-1).

As electron donor compound to be reacted with the Group 2 metal compound is preferably a mono- or diester of an aromatic carboxylic acid or diacid, the latter being able to form a chelate-like structured complex. Said aromatic carboxylic acid ester or diester can be formed in situ by reaction of an aromatic carboxylic acid chloride or diacid dichloride with a C₂-C₁₆ alkanol and/or diol, and is preferable 2-ethyl-hexyl phthalate.

The reaction for the preparation of the Group 2 metal complex is generally carried out at a temperature of 20° to 80°C, and in case that the Group 2 metal is magnesium, the preparation of the magnesium complex is carried out at a temperature of 50° to 70°C.

The complex of the Group 2 metal is preferably a magnesium complex.

The compound of a transition metal is preferably a compound of a Group 4 metal. The Group 4 metal is preferably titanium, and its compound to be reacted with the complex of a Group 2 is preferably a halide.

In a further embodiment of the invention, a compound of a transition metal used in the process can also contain organic ligands typically used in the field known as a single site catalyst.

In a still further embodiment of the invention, a compound of a transition metal can also be selected from Group 5 metals, Group 6 metals, Cu, Fe, Co, Ni and/or Pd compounds.

In a preferred embodiment said process for producing the procatalysts comprises the steps of:
preparing a solution of magnesium complex by reacting an alkoxy magnesium compound and an electron donor or precursor thereof in a liquid reaction medium, comprising a C₆-C₁₀ aromatic hydrocarbon and/or the mixture of said aromatic hydrocarbon and an aliphatic C₅-C₁₆-hydrocarbon, more preferably in toluene and/or a mixture of toluene and an aliphatic C₅-C₁₂ and most preferably in a mixture of toluene and an aliphatic C₅-C₉-hydrocarbon; reacting said magnesium complex with a compound of at least one four-valent Group 4 metal at a temperature greater than 10°C and less than 60°C to produce an emulsion of a denser,
TiCl₄/liquid reaction medium-insoluble, oil dispersed phase having Group 4 metal/Mg mol ratio 0.1 to 10 in an oil disperse phase having Group 4 metal/Mg mol ratio 10 to 100;
agitating the emulsion, optionally in the presence of an emulsion stabilizer and/or a turbulence minimizing agent, in order to maintain the droplets of said dispersed phase within an average size range of 5 to 200 µm. The catalyst particles are obtained after solidifying said particles of the dispersed phase e.g. by heating.

The said disperse and dispersed phases are thus distinguishable from one another by the fact that the denser oil, if contacted with a solution of titanium tetrachloride in the liquid reaction medium, will not or only to a small degree dissolve in it. A suitable solution for establishing this criterion would be one having a liquid reaction medium mol ratio of 0.1 to 0.3. They are also distinguishable by the fact that the great preponderance of the Mg provided (as complex) for the reaction with the Group 4 metal compound is present in the dispersed phase, as revealed by comparison of the respective Group 4 metal/Mg mol ratios.

In effect, therefore, virtually the entirety of the reaction product of the Mg complex with the Group 4 metal - which is the precursor of the ultimate catalyst component - becomes the dispersed phase, and proceeds through the further processing steps to the final particulate form. The disperse phase, still containing a useful quantity of Group 4 metal, can be reprocessed for recovery of that metal.

The production of a two-phase, rather than single-phase (as in prior practice) reaction product is encouraged by carrying out the Mg complex/Group 4 metal compound reaction at low temperature, specifically above 10°C but below 60°C, preferably between above 20°C and below 50°C. Since the two phases will naturally tend to separate into a lower, denser phase and supernatant lighter phase, it is necessary to maintain the reaction product as an emulsion by agitation, preferably in the presence of an emulsion stabiliser.

The resulting particles from the dispersed phase of the emulsion are of a size, morphology (spherical shape) and uniformity which render the ultimate catalyst component extremely effective in olefin polymerisation. This morphology is preserved during the heating to solidify the particles, and of course throughout the final washing and optional drying steps. It is, by contrast, difficult to the point of impossibility to achieve such morphology through precipitation, because of the fundamental uncontrollability of nucleation and growth, and the large number of variables which affect these events.

Furthermore, emulsifying agents/emulsion stabilisers can be used additionally in a manner known in the art for facilitating the formation and/or stability of the emulsion. For the said purposes e.g. surfactants, e.g. a class based on acrylic or methacrylic polymers can be used. Preferably, said emulsion stabilizers are acrylic or methacrylic polymers, in particular those with medium sized ester side chains having more than 10, preferably more than 12 carbon atoms and preferably less than 30, and preferably 12 to 20 carbon atoms in the ester side chain. Particular preferred are unbranched C₁₂ to C₂₀-acrylates such as poly(hexadecyl)-methacrylate and poly(octadecyl)methacrylate.

Furthermore, in some embodiments a turbulence minimizing agent (TMA) can be added to the reaction mixture in order to improve the emulsion formation and maintain the emulsion structure. By using said TMA, catalyst component particles can be obtained, said particles having very narrow size distribution.

Reaction mixture here means the solution from the initial organic liquid reaction medium, over the solution of the complex up to the emulsion before solidifying the particles of the dispersed phase of the emulsion.

Preferably, the TMA is added to the reaction mixture when the emulsion is formed, however in any case before solidification of the droplets of the dispersed phase starts in order to make sure that a quite narrow particle size distribution can be obtained.

Said TMA agent has to be inert and soluble in the reaction mixture under the reaction conditions, which means that polymers without polar groups are preferred.

Accordingly, said TMA or mixtures thereof are preferred as polymers having linear aliphatic carbon backbone chains, which might be branched with short side chains only in order to serve for uniform flow conditions when stirring. Said TMA is in particular preferably selected from α-olefin polymers of α-olefin monomers with 6 to 20 carbon atoms, like polyoctene, polynonene, polydecene, polyundecene or polydodecene or mixtures thereof, having the molecular weight and general backbone structure as defined before. Most preferable it is polydecene.

TMA can be added to the emulsion in an amount of e.g. 1 to 1.000 ppm, preferably 5 to 100 ppm and more preferable 5 to 50 ppm, based on the total weight of the reaction mixture.

It has been found that the best results are obtained when the Group 4 metal/Mg mol ratio of the denser oil is 1 to 5, preferably 2 to 4, and that of the disperse phase oil is 55 to 65. Generally the ratio of the mol ratio Group 4 metal/Mg in the disperse phase oil to that in the denser oil is at least 10.

Solidification of the dispersed phase droplets by heating is suitably carried out at a temperature of 70-150°C, usually at 80-110°C, preferably at 90-110°C.

The finally obtained catalyst component is desirably in the form of particles having generally an average size range of 5 to 200 µm, preferably 10 to 100, more preferably 20 to 50 µm.

The reagents can be added to the aromatic reaction medium in any order. However it is preferred that in a first step the alkoxy magnesium compound is reacted with a carboxylic acid halide precursor of the electron donor to form an intermediate; and in a second step the obtained product is further reacted with the Group 4 metal. The magnesium compound preferably contains from 1 to 20 carbon atoms per alkoxy group, and the carboxylic acid should contain at least 8 carbon atoms.

Reaction of the magnesium compound, carboxylic acid halide and polyhydric alcohol proceeds satisfactorily at temperatures in the range 20 to 80°C, preferably 50 to 70°C. The product of that reaction, the "Mg complex", is however reacted with the Group 4 metal compound at a lower temperature, contrary to previous practice, to bring about the formation of a two-phase, oil-in-oil, product.

Use of an aromatic or aromatic/aliphatic medium for preparation of the Mg complex contributes to consistent product morphology and higher bulk density. Catalyst bulk density and morphology correlate with polymer product bulk density and morphology according to the so-called "replication effect".

The reaction medium used as solvent can be aromatic or a mixture of aromatic and aliphatic hydrocarbons, the latter one containing 5 - 20 carbon atoms, preferably 5 - 16 carbon atoms more preferably 5 - 12 carbon atoms and most preferably 5 to 9 carbon atoms. Preferably, the aromatic hydrocarbon is selected substituted and unsubstituted benzenes, preferably from alkylated benzenes, even more preferably from toluene and xylenes, and is most preferably toluene.

The molar ratio of said reaction medium to magnesium is preferably less than 10, for instance from 4 to 10, preferably from 5 to 9. Said aliphatic hydrocarbons also can be added to the reaction mixture separately and are then preferably added after the reaction of Mg complex with the TiCl₄.

For isolating the solidified particles the reaction mixture is allowed to settle and the solidified particles are recovered from this reaction mixture for example by syphoning or by an in-stream filtering unit.

The solidified particles are then washed (step i-5) at least once up to six times, preferably at least twice, most preferably at least three times with a hydrocarbon, which preferably is selected from aromatic and aliphatic hydrocarbons, preferably with toluene, particularly with hot (e.g. 80 to 100°C) toluene, which might include a smaller or higher amount of TiCl₄ in it. The amount of TiCl₄ can vary from a few Vol% to more than 50 Vol%, such as from 5 Vol% to 50 Vol%, preferably up to 30 Vol% and more preferably from 5 to 15 Vol%. It is also possible that at least one wash is done with 100 Vol% TiCl₄. One or several further washes after aromatic and/ or TiCl₄ washes can be run with aliphatic hydrocarbons of 4 to 8 carbon atoms. Preferable these latter washings are performed with heptane and/or pentane. Washings can be done with hot (e.g. 90°C) or cold (room temperature) hydrocarbons or combinations thereof. It is also possible that all washings will be done with the same solvent, e.g. toluene.

The washing can be optimized to give a catalyst component with novel and desirable properties. Subsequently, the washed solidified particles are dried or slurried to an oily liquid with or without drying.

The alkoxy magnesium compound group is preferably selected from the group consisting of magnesium dialkoxides, complexes of a magnesium dihalide and an alcohol, and complexes of a magnesium dihalide and a magnesium dialkoxide. It may be a reaction product of an alcohol and a magnesium compound selected from the group consisting of dialkyl magnesiums, alkyl magnesium alkoxides, alkyl magnesium halides and magnesium dihalides. It can further be selected from the group consisting of dialkyloxy magnesiums, diaryloxy magnesiums, alkyloxy magnesium halides, aryloxy magnesium halides, alkyl magnesium alkoxides, aryl magnesium alkoxides and alkyl magnesium aryloxides.

The magnesium dialkoxide may be the reaction product of a dialkyl magnesium of the formula R₂Mg, wherein each one of the two Rs is a similar or different C₁-C₂₀ alkyl, preferably a similar or different C₄-C₁₀ alkyl. Typical magnesium alkyls are ethylbutyl magnesium, dibutyl magnesium, dipropyl magnesium, propylbutyl magnesium, dipentyl magnesium, butylpentylmagnesium, butyloctyl magnesium and dioctyl magnesium. Most preferably, one R of the formula R₂Mg is a butyl group and the other R is an octyl group, i.e. the dialkyl magnesium compound is butyl octyl magnesium.

Typical alkyl-alkoxy magnesium compounds RMgOR, when used, are ethyl magnesium butoxide, butyl magnesium pentoxide, octyl magnesium butoxide and octyl magnesium octoxide.

Dialkyl magnesium, alkyl magnesium alkoxide or magnesium dihalide can react with a monohydric alcohol R'OH or a mixture thereof with a polyhydric alcohol R'(OH)ₘ.

Typical C₁-C₂₀ monohydric alcohols are methanol, ethanol, n-propanol, iso-propanol, n-butanol, iso-butanol, sec.butanol, tert.butanol, n-amyl alcohol, iso-amyl alcohol, sec. amyl alcohol, tert. amyl alcohol, diethyl carbinol, sec. isoamyl alcohol, tert. butyl carbinol. Typical C₆-C₁₀ monohydric alcohols are hexanol, 2-ethyl-1-butanol, 4-methyl-2-pentanol, 1-heptanol, 2-heptanol, 4-heptanol, 2,4-dimethyl-3-pentanol, 1-octanol, 2-octanol, 2-ethyl-1-hexanol, 1-nonanol, 5-nonanol, diisobutyl carbinol, 1-decanol and 2,7-dimethyl-2-octanol. Typical >C₁₀ monohydric alcohols are n-1-undecanol, n-1-dodecanol, n-1-tridecanol, n-1-tetradecanol, n-1-pentadecanol,1-hexadecanol, n-1-heptadecanol and n- 1 octadecanol. The monohydric alcohols may be unsaturated, as long as they do not act as catalyst poisons.

Preferable monohydric alcohols are those of formula R'OH in which R' is a C₂-C₁₆ alkyl group, most preferably a C₄-C₁₂ alkyl group, particularly 2-ethyl-1-hexanol.

The reaction medium may also contain a polyalcohol, which may have a straight- or branched-chain. Typical C₂ to C₆ polyhydric alcohols may be straight-chain or branched and include ethylene glycol, propylene glycol, trimethylene glycol, 1,2-butylene glycol, 1,3-butylene glycol, 1,4-butylene glycol, 2,3-butylene glycol, 1,5-pentanediol, 1,6-hexanediol, 1,8-octanediol, pinacol, diethylene glycol, triethylene glycol, and triols such as glycerol, methylol propane and pentaerythritol. Further, di- and polyethers may be part of the reaction medium. The polyhydric alcohol can be selected on the basis of the activity and morphology it gives the catalyst component.

The reaction mixture can contain the above mono- or polyhydric alcohols and di- or polyethers alone or as any mixtures.

The compound of a fourvalent Group 4 metal compound containing a halogen is preferably a titanium tetrahalide. Equivalent to titanium tetrahalide is the combination of an alkoxy titanium halide and a halogenation agent therefore, which are able to form a titanium tetrahalide *in situ.* The most preferred halide is the chloride, for zirconium and hafnium as well as for titanium.

The reaction conditions used in the claimed process may be varied according to the used reactants and agents.

As is known, the addition of at least one halogenated hydrocarbon during the process can lead to further improved catalytic activity. Reactive halogenated hydrocarbons preferably have the formula R"'X"'ₙ wherein R"' is an n-valent C₁-C₂₀ hydrocarbyl group, particularly a C₁-C₁₀ paraffin, X"' is a halogen and n is an integer from 1 to 4.

Such chlorinated hydrocarbons include monochloromethane, dichloromethane, trichloromethane (chloroform), tetrachloromethane, monochloroethane, (1,1)-dichloroethane, (1,2)-dichloroethane, (1,1,1)-trichloroethane, (1,1,2)-trichloroethane, (1,1,1,2)-tetrachloroethane, (1,1,2,2) tetrachloroethane, pentachloroethane, hexachloroethane, (1)-chloropropane, (2)-chloropropane, (1,2)-dichloropropane, (1,3)-dichloropropane, (1,2,3)trichloropropane, (1)-chlorobutane, (2)-chlorobutane, isobutyl chloride, tert.butyl chloride, (1,4)-dichlorobutane, (1)-chloropentane, (1,5)-dichloropentane. The chlorinated hydrocarbons may also be unsaturated, provided that the unsaturation does not act as catalyst poison in the final catalyst component.

In the above formula, R"' is preferably a mono-or bivalent C₁-C₁₀ alkyl group, independently, X'" is preferably chlorine and, independently, n is preferably 1 or 2. Preferred compounds include butyl chloride (Bucl), dichloroalkanes such as (1,4)-dichlorobutane, and tertiary butyl chloride.

In addition, during the procatalyst preparation a reducing agent, which decreases the amount of titanium present in said solidified particles of the olefin polymerisation catalyst component being present in the oxidation state +4, can be added.

Suitable reducing agents are aluminium alkyl compounds, aluminium alkyl alkoxy compounds as well as magnesium compounds as defined in the present specification.

Suitable aluminium compounds have a general formula AIR₃₋ₙXₙ, wherein R stands for a straight chain or branched alkyl or alkoxy group having 1 to 20, preferably 1 to 10 and more preferably 1 to 6 carbon atoms, X independently represents a residue selected from the group of halogen, preferably chloride, and n stands for 0, 1 or 2. At least one of the R residues has to be an alkyl group.

The compound can be added as an optional compound to the procatalyst synthesis and brought into contact with the droplets of the dispersed phase of the agitated emulsion before drying or slurring the solidified particles in step (i-6). I.e. the Al compound can be added at any step (b) to d), or during the washing step e), however, before step (i-6). Reference is made to WO 2004/029112, EP-A-1 862 480 and to EP-A-1 862 481.

Illustrative examples of aluminium alkyl and alkoxy compounds to be employed in accordance with the present invention are:
Tri-(C₁-C₆)-alkyl aluminium compounds and chlorinated aluminium alkyl compounds, especially diethyl aluminium chloride; diethyl aluminium ethoxide, ethyl aluminium diethoxide, diethyl aluminium methoxide, diethyl aluminium propoxide, diethyl aluminium butoxide, dimethyl aluminium ethoxide, of which in particular diethyl aluminium ethoxide is preferred.

Suitable magnesium compounds are magnesium compounds as defined herein in connection with the complex of a Group 2 metal. The respective disclosure is incorporated herein by reference with respect to the magnesium compound to be added in accordance with the process of the present invention. In particular, suitable magnesium compounds are dialkyl magnesium compounds or halogenated alkyl magnesium compounds of the general formula MgR₂₋ₙXₙ, where each n is 0 or 1, and each R are same or different alkyl groups with 1 to 8 carbon atoms and X is halogen, preferably Cl. One preferred magnesium compound is butyloctyl magnesium (commercially available under the trade name BOMAG), which is already preferably used in the preparation of the Mg complex.

The optional Al compound is added in such an amount that the final catalyst component particles have Al content of 0.0 to 1.0 wt%, preferably 0.1 to 0.8 wt% or 0.2 to 0.5 wt%. The preferred amounts depend to some extent on the Al compound, e.g. if an Al alkoxy compound is used, the preferred final Al amounts seem to be lower than if e.g. Al alkyl chloride compounds are used.

The magnesium compound to be added in accordance with the present invention is added in corresponding amounts.

Preferably an Al alkyl or Al alkyl alkoxy compound, as defined above, is added.

Furthermore a small amount of a phosphorous compound can be added during the preparation of the catalyst component; preferably to the magnesium complex, the liquid/liquid two-phase system during the catalyst component preparation prior to solidification, or to the washing liquid (step (i-5)), but again before step (i-6).

Accordingly, the addition of the phosphorous compound may be effected from step (i-1) until the completion of the particle formation, i.e. step (i-4), or thereafter, for example in a subsequent washing step to be carried out after step (i-4) but prior to step (i-6). The completion of the particle formation is usually achieved when the remaining toluene-soluble components have been washed out from the catalyst particles during solidifying said particles. Thus, the phosphorous compound can be preferably added, in pure form or in the form of a solution, from the beginning of the formation of the solution according to step (i-1) until adding it to the washing liquid, mostly toluene. It is in particular preferred to add the phosphorous compound to the washing liquid.

The addition amount of the phosphorous compound is typically selected so that a molar ratio of Group 2 metal and phosphorous is within the range of 0.05 to 1, preferably 0.1 to 0.5, more preferably 0.1 to 0.3, and most preferably 0.15 to 0.25, such as about 0.2.

It has been found, that the amount of the final P content in the catalyst component is very small, and below the detection limit. However, in some embodiments small amounts of P can be detected in the final catalyst component, and the amount of P may be 0.8 wt% or less, preferably 0.6 wt% or less, more preferably 0.4 wt% or less.

The phosphorous compound to be used in accordance with the present invention typically is a compound comprising phosphorous in the oxidation state of +5 or +3, preferably +5. Suitable examples of phosphorous compounds of the oxidation state of phosphorous of +3 are phosphines, such as tri-alkyl or tri-aryl phosphines, such as tri-phenyl phosphine. Preferred however, are, as indicated above, phosphorous compounds comprising phosphorous in the oxidation state +5. Particular examples thereof are compounds of the formula O=P(R)₃ wherein the three residues R may be identical or different and may be selected among halogens, including Cl, Br, and I, preferably Cl, alkyls, alkenyls, aryls, phenyls with 1 to 20 C-atoms, preferably 1 to 16, more preferably 1 to 12 C-atoms, wherein the groups optionally may be substituted once or twice, preferably with any of the groups identified above. Still more preferably R are alkyls with 1 to 16 C-atoms, preferably 1 to 12, more preferably 1 to 8 C-atoms or Cl, and a particular example is O=PCl₃ which may be suitably used in particular when wishing to add the phosphorous compound already in step a) or b). Another group of particular examples thereof are compounds of the formula O=P(OR)₃ wherein the three residues R may be identical or different and may be selected among alkyls, alkenyls, aryls, phenyls with 1 to 20 C-atoms, preferably 1 to 16, more preferably 1 to 12 C-atoms, wherein the groups optionally may be substituted once or twice, preferably with any of the groups identified above and halogens, including Cl, Br, and I. Still more preferably R are alkyls with 1 to 16 C-atoms, preferably 1 to 12, more preferably 1 to 8 C-atoms, and Alkyls with 2 to 6 C-atoms are especially useful, such as tributyl phosphate.

The aluminium alkyl or alkoxy compound, the magnesium compound and the phosphorous compound can be used alone or in combination.

The optional Al, Mg or P compound or a mixture thereof is preferably added before step (i-6), more preferably during the washing step (i-5), which comprises at least one, preferably two and more preferably three washing procedures with the same or preferably different hydrocarbons as washing medium.

The aluminium alkyl or alkoxy compound, magnesium compound and/ or the phosphorous compound to be used in the catalyst component preparation of the invention can be added to any of the washing mediums, which are, as described above, preferably toluene, heptane and/or pentane.

Though the procatalyst preparation according to the inventive method can be carried out batch-wise, it is also preferable and possible to prepare the catalyst component semi-continuously or continuously. In such semi-continuous or continuous process, the solution of the complex of the group 2 metal and said electron donor, which is prepared by reacting the compound of said metal with said electron donor in an organic liquid reaction medium, is mixed with at least one compound of a transition metal, which might be solved in the same or different organic liquid reaction medium. The so obtained solution is then agitated, possibly in the presence of an emulsion stabilizer, and then the so-agitated emulsion is fed into a temperature gradient reactor, in which the emulsion is subjected a temperature gradient, thus leading to solidifying the droplets of a dispersed phase of the emulsion. The optional TMA is preferably contained in the solution of the complex or added to the solution before feeding the agitated solution to the temperature gradient reactor.

When feeding said agitated emulsion to the temperature gradient reactor, an inert solvent, in which the droplets are not soluble, can additionally be fed into that gradient reactor in order to improve the droplet formation and thus leading to a uniform grain size of the particles of the catalyst component, which are formed in the temperature gradient reactor when passing through said line. Such additional solvent might be the same as the organic liquid reaction medium, which is used for preparing the solution of the complex of the group 2 metal as explained above in more detail.

The solidified particles of the olefin polymerisation catalyst component can subsequently be recovered by an in-stream filtering unit and then, optionally after some additional washing and drying steps in order to remove unreacted starting components, can be stored for further use. In one embodiment the catalyst can be fed after washing steps into the olefin polymerisation reactor, so that a continuous preparation and feed to the reactor is guaranteed. It is also possible to mix the solidified and washed catalyst component with an oily fluidic liquid and store and use the catalyst component as catalyst component-oil slurry. In this way the drying steps can be avoided, which might be sometimes detrimental to the catalyst components morphology. This oil-slurry method is described in general in EP-A-1489110 of the applicant.

As it can be seen from the above description of the semi-continuous or continuous process, it is thus possible to use separated reaction vessels for the different process steps and to transfer the reaction products which are prepared in the respective reaction vessels and to feed them in-line into further reaction vessels for formation of the emulsion and, subsequently, of the solidified particles.

It is preferred to use a full-continuous process as the time saving in said process is remarkable. In such fully continuous process, the formation of the solidified particles could be carried out in the temperature gradient line in the kind of pipe reactor, which is sufficiently long and which is subjected said temperature gradient from the starting temperature in the lower range of 20 to 80°C up to a "solidifying" temperature of 70 to 150°C. The temperature gradient is preferably obtained by means of heating the pipe reactor from the outside by applying normal heaters, or microwaves.

As mentioned before, a filtering unit might preferably be used for filtering the solidified particles from the solvent stream. For said filtering unit, various drums and sieving systems can be used, depending on the specific particle sizes.

The catalyst preparation is to be carried out under oxygen and moister free conditions. In general, this means that catalyst preparation is performed under an inert gas atmosphere. Typical inert gases suitable for such catalyst preparations are for example argon and nitrogen.

According to one specific embodiment of the present invention the inert gas, like for example nitrogen, used according to the state of the art for providing inert (oxygen and moisture free) conditions can be replaced totally or partially with H₂ from 5% up to 100% (Vol%) during the preparation of the catalyst component.

Thus, preferably a mixture of H₂ and N₂, for example a Formier gas, is used for preparing the catalyst component according to the invention.

The Vol%-ratio between N₂ and H₂ of the preferably used Formier gas can vary from 95:5 to 70:30.

Formier gases are commercially available with the following Vol%-ratio (N₂/H₂): 95/5; 92/8; 90/10; 85/15; 80/20 and 70/30.

According to the present invention Formier gases with a Vol%-ratio (N₂/H₂) of 95/5; 92/8; 90/10; 85/15 are preferred. More preferably a Formier gas with a Vol%-ratio (N₂/H₂) of 95/5 or 90/10 is used.

However, it has to be understood that use of a Formier gas is only one practical possibility to incorporate H₂ into the catalyst preparation. It is naturally possible that the reactions are carried out under an inert gas atmosphere using N₂ or e.g. argon gas, but H₂-gas being added separately at any desired step into the system.

The H₂ or the Formier gas can be added according to the invention to at least one of the production steps (i-1) to (i-7) up to during all of the production steps (i-1) to (i-7).

Preferably the H₂ or the Formier gas is added during washing (step (i-5)); during drying (step (i-6)); during washing and drying or recovering (step (i-5) and (i-6) or (i-7)); during or after slurring the solidified particles to an oily liquid without drying (step (i-6)), during step (i-7)); during step (i-1) to step (i-6)) or during the whole preparation process (step (i-1) to step (i-7)).

In a further embodiment of the present invention ethylene can be added during all the washing steps (step (i-5)) and/or during or after the preparation of the oil slurry of the ready catalyst (step (i-6)) and/or during recovering (step (i-7)) in addition to H₂ or to the Formier gas.

For the production of the propylene homo- or copolymers according to the invention the catalyst system used comprises in addition to the Ziegler-Natta procatalyst (i) an organometallic cocatalyst as component (ii).

Accordingly it is preferred to select the cocatalyst from the group consisting of trialkylaluminium, like triethylaluminium (TEA), triisobutylaluminium, tri-n-butylaluminium; dialkyl aluminium chloride, like dimethyl- or diethyl aluminium chloride; and alkyl aluminium sesquichloride. More preferably the cocatalyst is triethylaluminium or diethylaluminium chloride, most preferably triethylaluminium is used as cocatalyst.

Component (iii) of the catalysts system used is an external donor represented by formula (I)

Si(OCH₂CH₃)₃(NR¹R²) (I)

wherein R¹ and R² can be the same or different and represent a hydrocarbon group having 1 to 12 carbon atoms.

R¹ and R² are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that R¹ and R² are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl. More preferably both R¹ and R² are the same and have 1 to 6 carbon atoms, yet more preferably both R¹ and R² are a C₁-C₄-alkyl group.

Most preferably the external donor represented by the formula (I) is diethylaminotriethoxysilane.

The external donor represented by the formula (I) may be produced according to the methods disclosed in EP 1538 167.

The weight ratio of the organoaluminium compound to external donor ranges preferably between 1 and 10, more preferably between 2 and 5.

Surprisingly it has been found that by the usage of the special combination of a Ziegler-Natta procatalyst, preferably prepared with the emulsion/solidification technology, an organometallic cocatalyst and a specific external donor, propylene homo- or copolymers with ultra high melt flow can be produced directly without the need of any further processing step, like visbreaking.

The expression propylene homopolymer as used throughout the instant invention relates to a polypropylene that consists substantially, i.e. of equal or below than 99.9 wt%, of propylene units. In a preferred embodiment only propylene units in the propylene homopolymer are detectable. The comonomer content can be determined by FT infrared spectroscopy.

By the expression "copolymer" a "random copolymer" is meant wherein the comonomer in said copolymer is distributed randomly, i.e. by statistical insertion of the comonomer units, within the copolymer chain. Said term "random" copolymer is generally known and used in the art.

Thus a further aspect of the present invention is the use of a catalyst system comprising
(i) a Ziegler-Natta procatalyst which is prepared with the emulsion/solidification technology
(ii) an organometallic cocatalyst and
(iii) external donor represented by the formula (I)

   Si(OCH₂CH₃)₃(NR¹R²) (I)

   wherein R¹ and R² can be the same or different and represent a hydrocarbon group having 1 to 12 carbon atoms,
   for the production of propylene homo- or copolymers with ultra high melt flow MFR₂ (230°C, 2.16kg, ISO 1133) in the range of 1200 to 3000 g/10min, which are suitable for blow moulding applications, preferably for preparing fibres.

According to the present invention the special combination of Ziegler-Natta procatalyst, organometallic cocatalyst and specific external donor as described above is used in a two-stage polymerisation process.

The first polymerisation step of the process according to the invention is a slurry phase polymerisation step.

The second polymerisation step of the process according to the invention is a gas phase polymerisation step, which is performed in a gas phase reactor.

A preferred sequential polymerisation process is a "loop/gas phase"-process, such as developed by Borealis (known as BORSTAR® technology) described e.g. in patent literature, such as in EP 0 887 379, WO 92/12182, WO 99/24478, WO 99/24479 or in WO 00/68315.

A further suitable slurry-gas phase process is the Spheripol^{®} process of Basell.

With respect to the above-mentioned preferred slurry-gas phase process, the following general information can be provided with respect to the process conditions.

The polymerisation in the first polymerisation step is as mentioned above conducted in slurry, whereby the polymer particles formed in the polymerisation, together with the catalyst fragmented and dispersed within the particles, are suspended in a fluid hydrocarbon. The slurry is agitated to enable the transfer of reactants from the fluid into the particles.

Slurry polymerisation is preferably a so called bulk polymerisation. By "bulk polymerisation" is meant a process where the polymerisation is conducted in a liquid monomer essentially in the absence of an inert diluent. However, as it is known to a person skilled in the art the monomers used in commercial production are never pure but always contain aliphatic hydrocarbons as impurities. For instance, the propylene monomer may contain up to 5 % of propane as an impurity. As propylene is consumed in the reaction and also recycled from the reaction effluent back to the polymerisation, the inert components tend to accumulate, and thus the reaction medium may comprise up to 40 wt% of other compounds than monomer. It is to be understood, however, that such a polymerisation process is still within the meaning of "bulk polymerisation", as defined above.

The temperature in the slurry polymerisation is typically from 50 to 110°C, preferably from 60 to 100°C and in particular from 65 to 95°C. The pressure is from 1 to 150bar, preferably from 10 to 100bar. In some cases it may be preferred to conduct the polymerisation at a temperature which is higher than the critical temperature of the fluid mixture constituting the reaction phase and at a pressure which is higher than the critical pressure of said fluid mixture. Such reaction conditions are often referred to as "supercritical conditions". The phrase "supercritical fluid" is used to denote a fluid or fluid mixture at a temperature and pressure exceeding the critical temperature and pressure of said fluid or fluid mixture.

The slurry polymerisation may be conducted in any known reactor used for slurry polymerisation. Such reactors include a continuous stirred tank reactor and a loop reactor. It is especially preferred to conduct the polymerisation in loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

The residence time can vary in the reactor zones identified above. In one embodiment, the residence time in the slurry reactor, for example a loop reactor, is in the range of from 0.5 to 5 hours, for example 0.5 to 2 hours, while the residence time in the gas phase reactor generally will be from 1 to 8 hours.

The slurry may be withdrawn from the reactor either continuously or intermittently. A preferred way of intermittent withdrawal is the use of settling legs where the solids concentration of the slurry is allowed to increase before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and EP-A-1860125. The continuous withdrawal may be combined with a suitable concentration method, as disclosed in EP-A-1860125 and EP-A-1591460.

Into the slurry polymerisation stage other components may also be introduced as it is known in the art. Thus, hydrogen is added to control the molecular weight of the polymer. Process additives may also be introduced into the reactor to facilitate a stable operation of the process.

Since the slurry polymerisation stage is followed by a gas phase polymerisation stage it is preferred to conduct the slurry directly into the gas phase polymerisation zone without a flash step between the stages. This kind of direct feed is described in EP-A-887379, EP-A-887380, EP-A-887381 and EP-A-991684.

The polymerisation in gas phase may be conducted in a fluidized bed reactor, in a fast fluidized bed reactor or in a settled bed reactor or in any combination of these. When a combination of reactors is used then the polymer is transferred from one polymerisation reactor to another. Furthermore, a part or whole of the polymer from a polymerisation stage may be returned into a prior polymerisation stage.

Ad fluidized bed:
In a fluidized bed gas phase reactor an olefin is polymerised in the presence of a polymerisation catalyst in an upwards moving gas stream. The reactor typically contains a fluidized bed comprising the growing polymer particles containing the active catalyst located above a fluidization grid.

The polymer bed is fluidized with the help of the fluidization gas comprising the olefin monomer, eventual comonomer(s), eventual chain growth controllers or chain transfer agents, such as hydrogen, and eventual inert gas. The fluidization gas is introduced into an inlet chamber at the bottom of the reactor. To make sure that the gas flow is uniformly distributed over the cross-sectional surface area of the inlet chamber the inlet pipe may be equipped with a flow dividing element as known in the art, e.g. US-A-4933149 and EP-A-684871. One or more of the above-mentioned components may be continuously added into the fluidization gas to compensate for losses caused, among other, by reaction or product withdrawal.

From the inlet chamber the gas flow is passed upwards through a fluidization grid into the fluidized bed. The purpose of the fluidization grid is to divide the gas flow evenly through the cross-sectional area of the bed. Sometimes the fluidization grid may be arranged to establish a gas stream to sweep along the reactor walls, as disclosed in WO-A-2005/087361. Other types of fluidization grids are disclosed, among others, in US-A-4578879, EP 600414 and EP-A-721798. An overview is given in Geldart and Bayens: The Design of Distributors for Gas-fluidized Beds, Powder Technology, Vol. 42, 1985.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas. The minimum fluidization velocity and the onset velocity of pneumatic transport can be calculated when the particle characteristics are know by using common engineering practise. An overview is given, among others in Geldart: Gas Fluidization Technology, J.Wiley & Sons, 1986.

When the fluidization gas is contacted with the bed containing the active catalyst the reactive components of the gas, such as monomers and chain transfer agents, react in the presence of the catalyst to produce the polymer product. At the same time the gas is heated by the reaction heat.

The unreacted fluidization gas is removed from the top of the reactor and cooled in a heat exchanger to remove the heat of reaction. The gas is cooled to a temperature which is lower than that of the bed to prevent the bed from heating because of the reaction. It is possible to cool the gas to a temperature where a part of it condenses. When the liquid droplets enter the reaction zone they are vaporised. The vaporisation heat then contributes to the removal of the reaction heat. This kind of operation is called condensed mode and variations of it are disclosed, among others, in WO-A-2007/025640, US-A-4543399, EP-A-699213 and WO-A-94/25495. It is also possible to add condensing agents into the recycle gas stream, as disclosed in EP-A-696293. The condensing agents are non-polymerisable components, such as n-pentane, isopentane, n-butane or isobutane, which are at least partially condensed in the cooler.

The gas is then compressed and recycled into the inlet chamber of the reactor. Prior to the entry into the reactor fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerisation.

The catalyst may be introduced into the reactor in various ways, either continuously or intermittently. Among others, WO-A-01/05845 and EP-A-499759 disclose such methods. Where the gas phase reactor is a part of a reactor cascade the catalyst is usually dispersed within the polymer particles from the preceding polymerisation stage. The polymer particles may be introduced into the gas phase reactor as disclosed in EP-A-1415999 and WO-A-00/26258. Especially if the preceding reactor is a slurry reactor it is advantageous to feed the slurry directly into the fluidized bed of the gas phase reactor as disclosed in EP-A-887379, EP-A-887380, EP-A-887381 and EP-A-991684.

The polymeric product may be withdrawn from the gas phase reactor either continuously or intermittently. Combinations of these methods may also be used. Continuous withdrawal is disclosed, among others, in WO-A-00/29452. Intermittent withdrawal is disclosed, among others, in US-A-4621952, EP-A-188125, EP-A-250169 and EP-A-579426.

The top part of the gas phase reactor may include a so called disengagement zone. In such a zone the diameter of the reactor is increased to reduce the gas velocity and allow the particles that are carried from the bed with the fluidization gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain a time-averaged bed level.

Also antistatic agent(s) may be introduced into the gas phase reactor if needed. Suitable antistatic agents and methods to use them are disclosed, among others, in US-A-5026795, US-A-4803251, US-A-4532311, US-A-4855370 and EP-A-560035. They are usually polar compounds and include, among others, water, ketones, aldehydes and alcohols.

The reactor may also include a mechanical agitator to further facilitate mixing within the fluidized bed. An example of suitable agitator design is given in EP-A-707513.

Typically the fluidized bed polymerisation reactor is operated at a temperature within the range of from 50 to 100 °C, preferably from 65 to 90 °C. The pressure is suitably from 10 to 40 bar, preferably from 15 to 30 bar.

Ad fast fluidized bed:
The polymerisation may also be conducted in a fast fluidized bed reactor. In such a reactor the velocity of the fluidization gas exceeds the onset velocity of pneumatic transport. Then the whole bed is carried by the fluidization gas. The gas transports the polymer particles to a separation device, such as cyclone, where the gas is separated from the polymer particles.
The polymer is transferred to a subsequent reaction zone, such as a settled bed or a fluidized bed or another fast fluidized bed reactor. The gas, on the other hand, is compressed, cooled and recycled to the bottom of the fast fluidized bed reactor. In one such embodiment the polymer is transferred from the riser (operated in fast fluidized mode) into the downcomer (operated as settled bed, as explained below) and the fluidizing gas is then directed to compression and cooling as described above. The combination of fast fluidized bed and settled bed is disclosed, among others, in WO-A-97/04015, WO-A-2006/022736 and WO-A-2006/120187.

Typically the fluidized bed polymerisation reactor is operated at a temperature within the range of from 50 to 100 °C, preferably from 65 to 90 °C. The pressure is suitably from 10 to 40 bar, preferably from 15 to 30 bar.

Ad settled bed:
Polymerisation may also be conducted in a settled bed. In the settled bed the polymer flows downward in a plug flow manner in an environment containing reactive components in gaseous phase. The polymer powder is introduced into the bed from the top from where it flows downwards due to gravity.

The reactants, such as hydrogen, monomer and comonomers, may be introduced at any point of the reactor. However, where the gas flows upwards its velocity should not exceed the minimum fluidization velocity as otherwise no downward flow of powder would be obtained. It is also preferred to have a gas buffer at the top of the reactor so that reaction gas from previous polymerisation zones contained in the polymer powder would be removed to the extent possible.

The temperature of the settled bed may be controlled by adjusting the temperature and ratio of the reactant and/or inert gases introduced into the settled bed zone.

The settled bed polymerisation zone is preferably combined with a fluidized bed polymerisation zone or fast fluidized bed reaction zone. Thus, the polymer is introduced into the top of the settled bed zone from a fluidized bed zone or a fast fluidized bed zone. The polymer is withdrawn from the bottom of the settled bed polymerisation zone and recycled into the fluidized bed polymerisation zone or fast fluidized bed polymerisation zone.

Polymerisation in settled bed is disclosed, among others, in EP-A-1633466, EP-A-1484343 and WO-A-97/04015.

Typically the settled bed polymerisation reactor is operated at a temperature within the range of from 50 to 100 °C, preferably from 65 to 90 °C. The pressure is suitably from 10 to 40 bar, preferably from 15 to 30 bar.

In addition to the actual polymerisation reactors used for producing the propylene homo- or copolymer, the polymerisation reaction system can also include a number of additional reactors, such as pre- and/or postreactors.

The prereactors include any reactor for prepolymerising the catalyst with propylene and/or other α-olefin(s) and/or ethylene, if necessary. Further, a catalyst preactivation step can be carried out before the prepolymerisation. The postreactors include reactors used for modifying and improving the properties of the polymer product. Typical examples of the postreactors are additional gas phase reactors for obtaining elastic properties. All reactors of the reactor system are preferably arranged in series.

Preferably the process comprises also a prepolymerisation step.

In a preferred embodiment, the prepolymerisation is conducted in a continuous manner as bulk slurry polymerisation in liquid propylene, i.e. the liquid phase mainly comprises propylene, with minor amount of other reactants and optionally inert components dissolved therein. Preferably the prepolymerisation is conducted in a continuous stirred tank reactor or a loop reactor.

The prepolymerisation reaction is typically conducted at a temperature of 0 to 60 °C, preferably from 10 to 50 °C, and more preferably from 20 to 45 °C.

The pressure in the prepolymerisation reactor is not critical but must be sufficiently high to maintain the reaction mixture in liquid phase. Thus, the pressure may be from 20 to 100 bar, for example 30 to 70 bar.

The prepolymerisation is carried out at an average residence time of 5 minutes up to 90 min. Preferably the average residence time is within the range of 10 to 60 minutes and more preferably within the range of 20 to 50 minutes.

The reaction conditions are well known in the art as disclosed, among others, in GB 1580635.

In the prepolymerisation step it is also possible to feed comonomers into the prepolymerisation stage. Examples of suitable comonomers are ethylene or alpha-olefins having from 4 to 10 carbon atoms. Especially suitable comonomers are ethylene, 1-butene, 1-hexene, 1-octene or their mixtures. Most preferable comonomer is ethylene.

In average, the amount of prepolymer on the catalyst is preferably from 10 to 1000 g per g of the solid catalyst component, more preferably is from 50 to 500 g per g of the solid catalyst component.

As the person skilled in the art knows, the catalyst particles recovered from a continuous stirred prepolymerisation reactor do not all contain the same amount of prepolymer. Instead, each particle has its own characteristic amount which depends on the residence time of that particle in the prepolymerisation reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst is preferably within the limits specified above. The amount of prepolymer is known in the art, among others, from GB 1580635.

The catalyst components are preferably all introduced into the prepolymerisation step. However, where the solid catalyst component and the cocatalyst can be fed separately it is possible that only a part of the cocatalyst is introduced into the prepolymerisation stage and the remaining part into subsequent polymerisation stages. Also in such cases it is necessary to introduce so much cocatalyst into the prepolymerisation stage that a sufficient polymerisation reaction is obtained therein.

It is possible to add other components also to the prepolymerisation stage. Thus, hydrogen may be added into the prepolymerisation stage to control the molecular weight of the prepolymer as is known in the art. Further, antistatic additive may be used to prevent the particles from adhering to each other or the walls of the reactor as disclosed in WO-A-00/66640.

According to the present invention the first stage is a slurry phase polymerisation, preferably performed in a loop reactor.

In this first step propylene and optionally an ethylene and/or C₄-C₁₂ alpha-olefin comonomer are polymerised.

Suitable C₄-C₁₂ alpha-olefin comonomers, preferably C₄-C₁₀ alpha-olefin comonomers are 1-butene, 1-pentene, 1-hexene, 4-methyl-1-pentene, 1-heptene, 1-octene, 1-nonene and 1-decene.

Preferred comonomers are ethylene, 1-butene and 1-hexene or mixtures therefrom, more preferably ethylene is used as the sole comonomer.

Thus the comonomer content in the slurry phase polymerisation product can be in the range of 0 to 5 wt%, preferably 0 to 3.0 wt%, more preferably 0 to 2.0wt%, and most preferably 0 to 0.5 wt%, based on the slurry phase polymerisation product.

Furthermore hydrogen is added to the slurry phase reactor, preferably loop reactor.

The slurry phase polymerisation product, being a first propylene homo- or copolymer component, is then transferred to the gas phase reactor.

In the gas phase reactor further propylene and optionally further ethylene and/or C₄-C₁₂ alpha-olefin comonomer are polymerised in the presence of the slurry phase polymerisation product.

The optional comonomer which may be used in the gas phase reactor may be different from that used in the slurry phase polymerisation, but is preferably the same.

Again suitable C₄-C₁₂ alpha-olefin comonomers, preferably C₄-C₁₀ alpha-olefin comonomers are 1-butene, 1-pentene, 1-hexene, 4-methyl-1-pentene, 1-heptene, 1-octene, 1-nonene and 1-decene.

Preferred comonomers are ethylene, 1-butene and 1-hexene or mixtures therefrom, more preferably ethylene is used as the sole comonomer.

In addition hydrogen is added to the gas phase polymerisation.

The product yielded after the gas phase polymerisation is the desired propylene homo- or copolymer.

The propylene homo- or copolymer produced according to the invention has an MFR₂ measured in accordance with ISO 1133 (230°C, 2.16kg) in the range of 1200 to 3000 g/10min, preferably 1200 to 2600 g/10min.

The comonomer content of the propylene copolymer produced according to the invention is in the range of 0 to 3.0 wt%, preferably 0 to 1.0 wt% and more preferably 0 to 0.8 wt%, based on the total propylene copolymer.

The xylene soluble fraction of the homo- or copolymer according to the present invention comprises less than 15 wt% (with respect to the total homo- or copolymer weight), advantageously between 4 and 12 wt%.

The propylene homo- or copolymers produced in accordance with the present invention have a molecular weight distribution in the range from 3 to 7.

From comparative examples it can be seen that especially by using the special combination of Ziegler-Natta procatalyst, preferably produced with the emulsion/solidification technology, and external donor higher melt flow rates in the loop and for the final product can be achieved than by using conventional Ziegler-Natta procatalysts and/or different external donors.

The homo- or copolymers produced according to the invention may further contain various conventional additives, such as antioxidants, UV-stabilizers, acid scavengers, antistatics, lubricants, demoulding agents, nucleating agents, clarifiers, fillers, coloring agents. in an amount of 0.001 to 10 wt%, preferably up to 5.0 wt% and more preferably up to 3.0 wt% based on the weight of the propylene homo- or copolymer.

In the preferred embodiments, the additives are added to the propylene homo- or copolymer. Preferably, these additives are mixed into the composition prior to or during the extrusion process in a one-step compounding process. Alternatively, a master batch may be formulated, wherein the propylene homo- or copolymer is first mixed with only some of the additives.

For mixing, a conventional compounding or blending apparatus, e.g. a Banbury mixer, a 2-roll rubber mill, Buss-co-kneader or a twin screw extruder may be used. The polymer materials recovered from the extruder are usually in the form of pellets. These pellets are then preferably further processed, e.g. by melt blown processes to generate articles and products of the inventive propylene homo- or copolymers.

Propylene homo- or copolymers according to the invention may be pelletized and compounded using any of the variety of compounding and blending methods well known and commonly used in the resin compounding art.

The propylene homo- or copolymers of the current invention can be used for the production of melt blown articles, preferably of melt blown fibres.

The polymer product obtained from the polymerisation process is particularly suitable for melt blowing processing products. The polymer from the reactor is pelletized and then fed into melt blowing processing equipment for spinning fibres. The improved melt strength of the material enables the production of very thin fibres. A typical product of a melt blowing process is, e.g., a fibrous non-woven fabric (or fabric laminates), which can be used for industrial or medical garments, wipers, towels, and filters.

One of the important properties for a filter made of polymer fibres is the pore size. Pore size of a filter should be small and the pores ought to be evenly distributed. The pore size is dependent on the fibre thickness (and its even distribution) and has an influence on the permeability of solid particles and air. In general, a higher blow-off speed results in thinner fibres and smaller pores. Filters produced from the material according to the present invention require higher blow-off speeds to provide equal alternatives to the commercial grades. However, the advantages gained during the polymerisation process, the good morphology of the fibres and the absence of die deposits and fumes compensate for the slightly higher energy costs at the melt blowing stage.

### EXAMPLES:

### A. METHODS

### Melt Flow Rate (MFR₂)

The melt flow rates were measured with a load of 2.16 kg (MFR₂) at 230 °C. The melt flow rate is that quantity of polymer in grams which the test apparatus standardized to ISO 1133 extrudes within 10 minutes at a temperature of 230 °C under a load of 2.16 kg.

### Comonomer content

The comonomer contents of the copolymer was determined by quantitative Fourier transform infrared spectroscopy (FTIR) calibrated to results obtained from quantitative ¹³C NMR spectroscopy.

When measuring the ethylene content in polypropylene, a thin film of the sample (thickness about 250 mm) was prepared by hot-pressing. The area of -CH₂- absorption peak (800-650 cm⁻¹) was measured with Perkin Elmer FTIR 1600 spectrometer.

The comonomer content C was determined using a film thickness method using the intensity of the quantitative band I(q) and the thickness of the pressed film T using the following relationship: [ I(q) / T ]m + c = C where m and c are the coefficients determined from the calibration curve constructed using the comonomer contents obtained from ¹³C NMR spectroscopy.

### Xylene cold soluble fraction (XCS wt%)

The xylene cold soluble fraction (XCS) is determined at 23 °C according to ISO 6427.

### B. EXAMPLES

### Inventive Example 1-4 (IE1-IE4) and Comparative Example 1-3 (CE1-3)

All polymers were produced in a Borstar pilot plant with a prepolymerisation reactor, one slurry loop reactor and one gas phase reactor.

The procatalyst used for IE1-IE4, CE1 and CE2 was prepared with the emulsion/solidification technology according to Example 8 of WO 2004/029112, except that diethylaluminium chloride was used as the aluminium compound instead of triethylaluminium.

As co-catalyst triethyl-aluminium (TEA) was used

For IE1-IE4 diethylaminotriethoxysilane was used as an external donor and for CE1 and CE2 dicyclopentyldimethoxysilane was used as external donor.

CE3 is a comparative example taken out from EP 1 303 547 (Example 3a, Type B catalyst) which uses a Ti-Ziegler-Natta-catalyst prepared according to WO 98/12234 with triethyl-aluminium (TEA) as co-catalyst and cyclohexyl-methyldimethoxysilane as external donor.

The obtained polymer compositions were pelletized by using a Berstorff 50 mm twin screw extruder at a temperature over 180 °C (e.g. 180 - 190 °C).

The additives comprised 1500 ppm Irganox B215 and 400 ppm calcium stearate.

| **Parameter** | **unit** | **IE 1** | **IE2** | **IE3** | **IE4** | **CE 1** | **CE2** | **CE3** |
|---|---|---|---|---|---|---|---|---|
| **Prepolymerisation** | | | | | | | | |
| temperature | [°C] | 30 | 30 | 30 | 30 | 30 | 30 | 20 |
| pressure | [kPa] | 5100 | 5000 | 5400 | 5600 | 5300 | 5200 | 5400 |
| Al/donor ratio | [mol/mol] | 29 | 25 | 30 | 30 | 10 | 10 | 28 |
| residence time | [h] | 0.37 | 0.37 | 0.39 | 0.39 | 0.36 | 0.36 | n.d. |
| Al/donor ratio | [mol/mol] | 50 | 55 | 45 | 44 | 130 | 128 | 260 |
| Catalyst feed | [g/h] | 7.5 | 6.9 | 8.0 | 8.2 | 3.1 | 3.1 | 0.75 |

| **Loop** | | | | | | | | |
|---|---|---|---|---|---|---|---|---|
| temperature | [°C] | 70 | 80 | 75 | 75 | 72 | 71 | 80 |
| pressure | [kPa] | 5400 | 550 | 5600 | 5650 | 5400 | 5400 | 5400 |
| residence time | [h] | 0.4 | 0.3 | 0.3 | 0.4 | 0.3 | 0.3 | 1.1 |
| H2/C3 ratio | [mol/kmol] | 20.0 | 19.6 | 34.0 | 32.5 | 10.0 | 9.7 | 2.1* |
| C2/C3 ratio | [mol/kmol] | 0.7 | 0 | 0 | 0 | 4.7 | 4.9 | 0 |
| MFR2 | [g/10 min] | **1688** | **1180** | **2090** | **3200** | **72** | **73** | **1008** |
| XCS | [wt%] | 10.1 | 10.9 | 10.9 | 10.9 | 4.3 | 4.3 | 4.5 |
| C2 content | [wt%] | 0.46 | 0 | 0 | 0 | 2.46 | 2.48 | 0 |

| **GPR 1** | | | | | | | | |
|---|---|---|---|---|---|---|---|---|
| temperature | [°C] | 80 | 90 | 90 | 90 | 85 | 85 | 80 |
| pressure | [kPa] | 1900 | 1900 | 1900 | 1900 | 2000 | 2000 | 2900 |
| residence time | [h] | 0.9 | 0.8 | 0.9 | 0.9 | 0.8 | 0.7 | 1.4 |
| H2/C3 ratio | [mol/kmol] | 174 | 188 | 212 | 202 | 140 | 147 | 0.13 |
| C2/C3 ratio | [mol/kmol] | 0 | 0 | 0 | 0 | 22 | 21 | 0 |
| XCS/pellet | [wt%] | 6.5 | 5.8 | 7.5 | 7.6 | 5.4 | 5.3 | 4.6 |
| C2 content | [wt%] | 0.4 | 0 | 0 | 0 | 2.9 | 2.6 | 0 |
| MFR2/pellet | [g/10 min] | **1260** | **1380** | **2500** | **2400** | **70** | **89** | **1040** |
| Split loop/GPR | [wt%] | 42/58 | 52/48 | 46/54 | 48/52 | 40/60 | 40/60 | 83/17 |

| | | | | | | | | |
|---|---|---|---|---|---|---|---|---|
| n.d. not defined * H₂-concentration was 2.1 mol% | | | | | | | | |

As can be seen from table 1 the process according to the invention (IE1-IE4) using the special procatalyst/external donor combination yields clearly higher MFR₂-values in loop as well as in the final product compared to other processes using different procatalysts and/or external donors.

## Claims

1. Process for the production of propylene homo- or copolymers with an MFR₂ (230°C, 2.16kg, ISO 1133) in the range of 1200 to 3000 g/10min,
said process comprises the steps of
a) polymerising propylene and optionally ethylene and/or a C₄-C₁₂ alpha-olefin comonomer in a slurry reactor in the presence of a polymerisation catalyst system, obtaining as slurry reactor product a first propylene homo- or copolymer component with an MFR₂ (230°C, 2.16kg, ISO 1133) in the range of 1000 to 4000 g/10min,
b) transferring the slurry reactor product into a gas phase reactor
c) further polymerising propylene and optionally ethylene and/or a C₄-C₁₂ alpha-olefin comonomer in the presence of said slurry reactor product and the polymerisation catalyst system
d) optionally recovering the so produced propylene homo- or copolymer for further processing,
said polymerisation catalyst system comprises
(i) a Ziegler-Natta procatalyst,
(ii) an organometallic cocatalyst and
(iii) an external donor represented by formula (I)
Si(OCH₂CH₃)₃(NR¹R²) (I)
wherein R¹ and R² can be the same or different and represent a hydrocarbon group having 1 to 12 carbon atoms.

2. The process according to claim 1, wherein the Ziegler-Natta procatalyst (i) is produced by emulsion/solidification technology comprising the steps of:
(i-1) preparing a solution of a complex of a Group 2 metal and an electron donor by reacting a compound of said metal with said electron donor or a precursor thereof in an organic liquid reaction medium,
(i-2) adding said solution of said complex to at least one compound of a transition metal to produce an emulsion, wherein the dispersed phase of which is in the form of droplets and contains more than 50 mol% of the Group 2 metal in said complex,
(i-3) agitating the emulsion in order to maintain the droplets of said dispersed phase within said predetermined average size range,
(i-4) solidifying said droplets of the dispersed phase,
(i-5) washing the solidified particles at least once,
(i-6) drying the solidified particles or slurring the solidified particles to an oily liquid with or without drying and optionally
(i-7) recovering the dried or slurried solidified particles of the olefin polymerisation catalyst component,
yielding the Ziegler-Natta procatalyst in the form of particles having a predetermined average size range of 5 to 200µm.

3. The process according to claim 2, wherein during the Ziegler-Natta procatalyst preparation an aluminium compound having a general formula AIR₃₋ₙXₙ, wherein R stands for a straight chain or branched alkyl or alkoxy group having 1 to 20, with at least one R being an alkyl group, X independently represents a residue selected from the group of halogen, and n stands for 0, 1, 2 or 3, and/or a magnesium compound of the general formula MgR₂₋ₙXₙ, where each n is 0 or 1, and each R are same or different alkyl groups with 1 to 8 carbon atoms and X is halogen, and/or a phosphorous compound comprising phosphorous in the oxidation state +3 or +5 of the formula O=P(OR)₃, wherein the three residues R may be identical or different and may be selected among alkyls, alkenyls, aryls, phenyls with 1 to 20 C-atoms, wherein the groups optionally may be substituted once or twice, is added at any stage before drying or slurring the solidified particles in step (i-6).

4. A process according to claim 2 or 3 wherein H₂ is added to at least one of the production steps (i-1) to (i-7) in form of H₂-gas or of a Formier gas with a Vol%-ratio between N₂ and H₂ from 95:5 to 70:30.

5. A process according to any of the proceeding claims 2 to 4, wherein additionally ethylene is added during step (i-5) and/or (i-6) and/or step (i-7).

6. Process according to anyone of the preceding claims, wherein the Ziegler-Natta procatalyst (i) is used in the presence of an organometallic cocatalyst (ii) selected from the group consisting of trialkylaluminium, dialkyl aluminium chloride and alkyl aluminium sesquichloride.

7. Process according to claim 6, **characterized in that** the cocatalyst is triethylaluminium or diethylaluminium chloride.

8. Process according to anyone of the preceding claims, wherein the Ziegler-Natta procatalyst is used in the presence of diethylaminotriethoxysilane as external donor.

9. Process according to anyone of the preceding claims, wherein the process comprises also a prepolymerisation step.

10. Process according to anyone of the preceding claims, wherein the optional comonomer used in step a) and step c) can be the same or different and is selected from the group of ethylene, 1-butene, 1-pentene, 1-hexene, 4-methyl-1-pentene, 1-heptene, 1-octene, 1-nonene and 1-decene or mixtures therefrom.

11. Process according to anyone of the preceding claims, wherein the comonomer content of the slurry phase polymerisation product is in the range of 0 to 5.0 wt%, preferably 0 to 3.0 wt% based on the slurry phase polymerisation product and wherein the comonomer content of the finally produced propylene homo- or copolymer is in the range of 0 to 3.0 wt%, preferably 0 to 1.0 wt% based on the total propylene copolymer.

12. Process according to anyone of the preceding claims, wherein the optional comonomer is ethylene.

13. Process according to anyone of the preceding claims, wherein the xylene soluble fraction of the finally produced propylene homo- or copolymer is up to 15 wt%, preferably 4 to 12 wt%, based on the total homo- or copolymer weight.

14. Use of propylene homo- or copolymers prepared according to any of preceding claims 1 to 13 for blow moulding applications, preferably for preparing fibers.

15. Use of a catalyst system comprising
(i) a Ziegler-Natta procatalyst which is prepared with the emulsion/solidification technology
(ii) an organometallic cocatalyst and
(iii) external donor represented by the formula (I)
Si(OCH₂CH₃)₃(NR¹R²) (I)
wherein R¹ and R² can be the same or different and represent a hydrocarbon group having 1 to 12 carbon atoms,
for the production of propylene homo- or copolymers with ultra high melt flow MFR₂ (230°C, 2.16kg, ISO 1133) in the range of 1200 to 3000 g/10min, which are suitable for blow moulding applications, preferably for preparing fibers.

## Patentansprüche

1. Verfahren zur Herstellung von Propylen-Homo- oder Copolymeren mit einer MFR₂ (230°C, 2,16 kg, ISO 1133) in dem Bereich von 1200 bis 3000 g/10 min, wobei das Verfahren die Schritte umfasst von
a) Polymerisieren von Propylen und gegebenenfalls Ethylen und/oder einem C₄-C₁₂ alpha-Olefin-Comonomer in einem Suspensions-Reaktor in Gegenwart eines Polymerisations-Katalysator-Systems, unter Gewinnen als Suspensions-Reaktor-Produkt einer ersten Propylen-Homo- oder Copolymer-Komponente mit einer MFR₂ (230°C, 2,16 kg, ISO 1133) in dem Bereich von 1000 bis 4000 g/10 min,
b) Überführen des Suspensions-Reaktor-Produkts in einen Gas-Phasen-Reaktor,
c) weiteres Polymerisieren von Propylen und gegebenenfalls Ethylen und/oder einem C₄-C₁₂ alpha-Olefin-Comonomer in Gegenwart des Suspensions-Reaktor-Produkts und des Polymerisations-Katalysator-Systems,
d) gegebenenfalls Gewinnen des so hergestellten Propylen-Homo- oder Copolymers zum weiteren Verarbeiten,
wobei das Polymerisations-Katalysator-System umfasst
(i) einen Ziegler-Natta-Prokatalysator,
(ii) einen Organo-Metall-Cokatalysator und
(iii) einen äußeren Donor, wiedergegeben durch Formel (I)
Si (OCH₂CH₃)₃(NR¹R²) (I)
worin R¹ und R² gleich oder verschieden sein können und eine Kohlenwasserstoff-Gruppe mit 1 bis 12 Kohlenstoff-Atomen wiedergeben.

2. Verfahren nach Anspruch 1, wobei der Ziegler-Natta Prokatalysator (i) durch Emulsions/Verfestigungs-Technologie hergestellt wird, umfassend die Schritte von:
(i-1) Herstellen einer Lösung eines Komplexes eines Metalls der Gruppe 2 und eines Elektronen-Donors durch Umsetzen einer Verbindung des Metalls mit dem Elektronen-Donor oder einer Vorstufe davon in einem organischen flüssigen Reaktions-Medium,
(i-2) Zugeben der Lösung des Komplexes zu mindestens einer Verbindung eines Übergangs-Metalls zum Herstellen einer Emulsion, wobei die dispergierte Phase davon in Form von Tröpfchen vorliegt und mehr als 50 Mol-% des Metalls der Gruppe 2 in dem Komplex enthält,
(i-3) Bewegen der Emulsion, um die Tröpfchen der dispergierten Phase in dem vorbestimmten mittleren Größen-Bereich zu halten,
(i-4) Verfestigen der Tröpfchen der dispergierten Phase,
(i-5) mindestens einmal Waschen der verfestigten Teilchen,
(i-6) Trocknen der verfestigten Teilchen oder Aufschlämmen bzw. Suspendieren der verfestigten Teilchen zu einer öligen Flüssigkeit mit oder ohne Trocknen und gegebenenfalls
(i-7) Gewinnen der getrockneten oder aufgeschlämmten bzw. suspendierten verfestigten Teilchen der Olefin-Polymerisations-Katalysator-Komponente, Gewinnen des Ziegler-Natta-Prokatalysators in Form von Teilchen mit einem vorbestimmten mittleren Größen-Bereich von 5 bis 200 µm.

3. Verfahren nach Anspruch 2, wobei während der Herstellung des Ziegler-Natta-Prokatalysators eine AluminiumVerbindung mit einer allgemeinen Formel AlR₃₋ₙXₙ, worin R für eine geradkettige oder verzweigte Alkyl- oder Alkoxy-Gruppe mit 1 bis 20 steht, wobei mindestens ein R eine Alkyl-Gruppe ist, X unabhängig einen Rest wiedergibt, ausgewählt aus der Gruppe von Halogen, und n für 0, 1, 2 oder 3 steht und/oder eine Magnesium-Verbindung der allgemeinen Formel MgR₂₋ₙXₙ, worin jedes n 0 oder 1 ist, und jedes R gleiche oder verschiedene Alkyl-Gruppen mit 1 bis 8 Kohlenstoff-Atomen sind und X Halogen und/oder eine Phosphor-Verbindung, umfassend Phosphor in dem Oxidationszustand +3 oder +5 der Formel O=P(OR)₃, worin die drei Reste R gleich oder verschieden sein können und ausgewählt sein können unter Alkyl(en), Alkenyl(en), Aryl(en), Phenyl(en) mit 1 bis 20 C-Atomen, wobei die Gruppen gegebenenfalls einmal oder zweimal substituiert sein können, darstellt, bei einer beliebigen Stufe vor Trocknen oder Aufschlämmen bzw. Suspendieren der verfestigten Teilchen in Schritt (i-6) zugesetzt wird.

4. Verfahren nach Anspruch 2 oder 3, wobei H₂ zu mindestens einem der Herstellungsschritte (i-1) bis (i-7) in Form von H₂-Gas oder eines Formier-Gases mit einem Vol.-%-Verhältnis zwischen N₂ und H₂ von 95:5 bis 70:30 gegeben wird.

5. Verfahren nach einem der vorangehenden Ansprüche 2 bis 4, wobei während Schritt (i-5) und/oder (i-6) und/oder Schritt (i-7) zusätzlich Ethylen zugegeben wird.

6. Verfahren nach einem der vorangehenden Ansprüche, wobei der Ziegler-Natta-Prokatalysator (i) in Gegenwart eines Organo-Metall-Cokatalysators (ii), ausgewählt aus der Gruppe, bestehend aus Trialkylaluminium, Dialkylaluminiumchlorid und Alkylaluminiumsesquichlorid, verwendet wird.

7. Verfahren nach Anspruch 6, **dadurch gekennzeichnet, dass** der Cokatalysator Triethylaluminium oder Diethylaluminiumchlorid ist.

8. Verfahren nach einem der vorangehenden Ansprüche, wobei der Ziegler-Natta-Prokatalysator in Gegenwart von Diethylaminotriethoxysilan als äußeren Donor verwendet wird.

9. Verfahren nach einem der vorangehenden Ansprüche, wobei das Verfahren auch einen Prepolymerisations-Schritt umfasst.

10. Verfahren nach einem der vorangehenden Ansprüche, wobei das in Schritt a) und Schritt c) verwendete wahlweise Comonomer gleich oder verschieden sein kann und aus der Gruppe von Ethylen, 1-Buten, 1-Penten, 1-Hexen, 4-Methyl-1-penten, 1-Hepten, 1-Octen, 1-Nonen und 1-Decen oder Gemischen davon ausgewählt ist.

11. Verfahren nach einem der vorangehenden Ansprüche, wobei der Comonomer-Anteil des Aufschlämmungs- bzw. Suspensions-Phasen-Polymerisations-Produkts in dem Bereich von 0 bis 5,0 Gew.-%, vorzugsweise 0 bis 3,0 Gew.-%, bezogen auf das Produkt der Aufschlämmungs- bzw. Suspensions-Phasen-Polymerisation, liegt und worin der Comonomer-Anteil des zum Schluss hergestellten Propylen-Homo- oder Copolymers in dem Bereich von 0 bis 3,0 Gew.-%, vorzugsweise 0 bis 1,0 Gew.-%, bezogen auf das gesamte Propylen-Copolymer, liegt.

12. Verfahren nach einem der vorangehenden Ansprüche, wobei das wahlweise Comonomer Ethylen ist.

13. Verfahren nach einem der vorangehenden Ansprüche, wobei die in Xylol lösliche Fraktion des zum Schluss hergestellten Propylen-Homo- oder Copolymers bis zu 15 Gew.-%, vorzugsweise 4 bis 12 Gew.-%, bezogen auf das gesamte Homo- oder Copolymergewicht, ist.

14. Verwendung von Propylen-Homo- oder Copolymeren, hergestellt gemäß einem der vorangehenden Ansprüche 1 bis 13 für Blasform-Anwendungen, vorzugsweise zum Herstellen von Fasern.

15. Verwendung eines Katalysator-Systems, umfassend
(i) einen Ziegler-Natta-Prokatalysator, der mit der Emulsion/Verfestigungs-Technologie hergestellt wird,
(ii) einen Organo-Metall-Cokatalysator und
(iii) einen äußeren Donor, wiedergegeben durch Formel (I)
Si (OCH₂CH₃)₃(NR¹R² (I)
worin R¹ und R² gleich oder verschieden sein können und eine Kohlenwasserstoff-Gruppe mit 1 bis 12 Kohlenstoff-Atomen wiedergeben,
zur Herstellung von Propylen-Homo- oder Copolymeren mit sehr hohem Schmelzfluss MFR₂ (230°C, 2,16 kg, ISO 1133) in dem Bereich von 1200 bis 3000 g/10 min, die für Blasform-Anwendungen, vorzugsweise zum Herstellen von Fasern, geeignet sind.

## Revendications

1. Procédé pour la production d'homo- ou de co-polymères de propylène présentant un MFR₂ (230°C, 2,16 kg, ISO 1133) situé dans la plage allant de 1200 à 3000 g/10 min,
ledit procédé comprenant les étapes
a) de polymérisation de propylène et éventuellement d'un comonomère d'éthylène et/ou d'α-oléfine en C₄ à C₁₂ dans un réacteur en suspension en présence d'un système catalyseur de polymérisation, ce qui donne, en tant que produit du réacteur en suspension, d'un premier composant homo- ou co-polymère de propylène ayant un MFR₂ (230°C, 2,16 kg, ISO 1133) situé dans la plage allant de 1000 à 4000 g/10 min,
b) de transfert du produit du réacteur en suspension dans un réacteur en phase gazeuse,
c) encore de polymérisation de propylène et éventuellement d'un comonomère d'éthylène et/ou d'α-oléfine en C₄ à C₁₂ en présence dudit produit du réacteur en suspension et du système catalyseur de polymérisation,
d) éventuellement de récupération de l'homo- ou du co-polymère de propylène ainsi produit pour un traitement ultérieur,
ledit système de catalyseur de polymérisation comprenant
(i) un procatalyseur de Ziegler-Natta,
(ii) un cocatalyseur organométallique, et
(iii)un donneur externe représenté par la formule (I)
Si (OCH₂CH₃)₃(NR¹R²) (I)
dans laquelle R¹ et R² peuvent être identiques ou différents et représentent un groupe hydrocarboné possédant 1 à 12 atome(s) de carbone.

2. Procédé selon la revendication 1, dans lequel le procatalyseur de Ziegler-Natta (i) est produit par une technologie d'émulsion/solidification comprenant les étapes :
(i-1) de préparation d'une solution d'un complexe d'un métal du Groupe 2 et d'un donneur d'électrons par réaction d'un composé dudit métal avec ledit donneur d'électrons ou un précurseur de celui-ci dans un milieu réactionnel liquide organique,
(i-2) d'ajout de ladite solution dudit complexe à au moins un composé d'un métal de transition pour produire une émulsion, dont la phase dispersée est sous la forme de gouttelettes et contient plus de 50 % en moles du métal du Groupe 2 dans ledit complexe,
(i-3) d'agitation de l'émulsion afin de maintenir les gouttelettes de ladite phase dispersée à l'intérieur de ladite plage de taille moyenne prédéterminée,
(i-4) de solidification desdites gouttelettes de la phase dispersée,
(i-5) de lavage des particules solidifiées au moins une fois,
(i-6) de séchage des particules solidifiées ou de mise en suspension des particules solidifiées dans un liquide huileux avec ou sans séchage et éventuellement
(i-7) de récupération des particules solidifiées mises en suspension ou séchées du composant catalyseur de polymérisation d'oléfine,
ce qui donne le procatalyseur de Ziegler-Natta sous la forme de particules présentant une plage de taille moyenne prédéterminée de 5 à 200 µm.

3. Procédé selon la revendication 2, dans lequel, durant la préparation du procatalyseur de Ziegler-Natta, un composé de l'aluminium de formule générale AlR₃₋ₙXₙ, dans laquelle R désigne un groupe alkyle ou alcoxy à chaîne droite ou ramifiée possédant 1 à 20, au moins un R étant un groupe alkyle, X représente indépendamment un résidu choisi dans le groupe des halogènes, et n vaut 0, 1, 2 ou 3, et/ou un composé du magnésium de formule générale MgR₂₋ₙXₙ, dans laquelle chaque n vaut 0 ou 1, et chaque R est un groupe alkyle identique ou différent possédant 1 à 8 atome(s) de carbone et X est un halogène, et/ou un composé du phosphore comprenant du phosphore à 1' état d'oxydation +3 ou +5 de formule O=P(OR)₃, dans laquelle les trois résidus R peuvent être identiques ou différents et peuvent être choisis parmi les radicaux alkyle, alcényle, aryle, phényle possédant 1 à 20 atome(s) C, les groupes pouvant éventuellement être substitués une ou deux fois, sont ajoutés à un stade quelconque avant le séchage ou la mise en suspension des particules solidifiées dans l'étape (i-6).

4. Procédé selon la revendication 2 ou 3, dans lequel H₂ est ajouté à au moins l'une des étapes de production (i-1) à (i-7) sous la forme de H₂ gazeux ou d'un gaz de Formier présentant un rapport, en pourcentage en volume, entre N₂ et H₂, de 95/5 à 70/30.

5. Procédé selon l'une quelconque des revendications 2 à 4, dans lequel de plus de l'éthylène est ajouté durant l'étape (i-5) et/ou (i-6) et/ou l'étape (i-7).

6. Procédé selon l'une quelconque des revendications précédentes, dans lequel le procatalyseur de Ziegler-Natta (i) est utilisé en présence d'un cocatalyseur organométallique (ii) choisi dans l'ensemble constitué par un trialkyl-aluminium, un chlorure de dialkyl-aluminium et un sesquichlorure d'alkyl-aluminium.

7. Procédé selon la revendication 6, **caractérisé en ce que** le cocatalyseur est le triéthyl-aluminium, ou le chlorure de diéthyl-aluminium.

8. Procédé selon l'une quelconque des revendications précédentes, dans lequel le procatalyseur de Ziegler-Natta est utilisé en présence de diéthylaminotriéthoxysilane à titre de donneur externe.

9. Procédé selon l'une quelconque des revendications précédentes, lequel procédé comprend aussi une étape de prépolymérisation.

10. Procédé selon l'une quelconque des revendications précédentes, dans lequel le comonomère optionnel utilisé dans l'étape a) et l'étape c) peut être identique ou différent et est choisi dans l'ensemble comprenant l'éthylène, le 1-butène, le 1-pentène, le 1-hexène, le 4-méthyl-1-pentène, le 1-heptène, le 1-octène, le 1-nonène et le 1-décène, ainsi que leurs mélanges.

11. Procédé selon l'une quelconque des revendications précédentes, dans lequel la teneur en comonomère dans le produit de polymérisation en phase en suspension est située dans la plage allant de 0 à 5,0 % en poids, de préférence de 0 à 3,0 % en poids par rapport au produit de polymérisation en phase en suspension, et dans lequel la teneur en comonomère de l'homo- ou co-polymère de propylène finalement produit est située dans la plage allant de 0 à 3,0 % en poids, de préférence de 0 à 1,0 % en poids par rapport au copolymère de propylène total.

12. Procédé selon l'une quelconque des revendications précédentes, dans lequel le comonomère optionnel est l'éthylène.

13. Procédé selon l'une quelconque des revendications précédentes, dans lequel la fraction soluble dans le xylène de l'homo ou du co-polymère de propylène finalement produit va jusqu'à 15 % en poids, de préférence est de 4 à 12 % en poids, par rapport au poids total de l'homo- ou du co-copolymère.

14. Utilisation d'homo- ou de co-polymères de propylène préparés selon l'une quelconque des revendications 1 à 13 pour des applications de moulage-soufflage, de préférence pour préparer des fibres.

15. Utilisation d'un système catalyseur comprenant
(i) un procatalyseur de Ziegler-Natta qui est préparé par la technologie d'émulsion/solidification,
(ii) un cocatalyseur organométallique, et
(iii)un donneur externe représenté par la formule (I)
Si(OCH₂CH₃)₃(NR¹R²) (I)
dans laquelle R¹ et R² peuvent être identiques ou différents et représentent un groupe hydrocarboné possédant 1 à 12 atome(s) de carbone,
pour la production d'homo- ou de co-polymères de propylène présentant un indice de fluage MFR₂ (230°C, 2,16 kg, ISO 1133) ultra élevé, situé dans la plage allant de 1200 à 3000 g/10 min, qui conviennent pour des application de moulage-soufflage, de préférence pour préparer des fibres.
